# EUROPEAN PATENT SPECIFICATION

(11) **EP 1 793 104 B1**
(45) Date of publication and mention of the grant of the patent: **07.04.2010**
(21) Application number: 06125462.9
(22) Date of filing: 05.12.2006
(51) Int. Cl.: F02B 75/20, F16F 15/24, F02B 75/02, F02B 75/18

(54) **A two-stroke internal combustion engine having 15 cylinders in a single row**
15-Zylinder-Zweitaktreihen-Verbrennungsmotor
Moteur à combustion interne à deux temps ä 15 cylindres en ligne

(30) Priority: 05.12.2005 WO PCT/DK2005/000773
(43) Date of publication of application: 06.06.2007
(73) Proprietor: MAN Diesel, filial af MAN Diesel SE, Tyskland, 2450 Copenhagen SV (DK)
(72) Inventor: HANSEN, Bo, DK-2000, FREDERIKSBERG (DK)
(74) Representative: Indahl, Peter Jensen

(56) References cited:
- EP-A- 0 713 000
- GB-A- 322 161
- ANONYMOUS: "Firing Sequences" TECHNICAL DESCRIPTION, [Online] 12 September 2003 (2003-09-12), XP002426761 Retrieved from the Internet: URL:www.manbw.com/article_002914.html> [retrieved on 2007-03-27]
- PATENT ABSTRACTS OF JAPAN vol. 2002, no. 02, 2 April 2002 (2002-04-02) & JP 2001 271653 A (MAN B & W DIESEL AS), 5 October 2001 (2001-10-05)

## Description

The present invention relates to a two-stroke internal combustion engine having 15 cylinders in a single row and a crankshaft, which internal combustion engine has a firing sequence (n1 - n15) of the engine cylinders C1 to C15.

It has been suggested to provide a 15 cylinder engine with the firing sequence 1 8 15 11 4 2 9 13 10 6 3 7 14 12 5. See "Firing Sequences", edition 12.09.2003 (MAN Diesel). Technical description in Danish for: firing sequence for engines with 10 or more cylinders. Retrieved from the Internet < URL: www.manbw.com/article_002914.html. The firing sequence of an engine is important for the vibrational characteristics of the engine system. The vibrations of primary relevance are external unbalanced moments, guide force moments, torsional vibrations in the shafting system and axial vibrations in the shafting system.

The vibrations are to a large extent caused by the inertia forces on the moving masses and gas forces acting on the pistons when the engine is running. These forces on an individual piston vary in time during one revolution of the engine. And all pistons with associated moving parts, like piston rod, crosshead, connecting rod and crankshaft throw, in the engine contribute to the resulting pattern of vibrations. The individual piston has a certain location in the engine, such as cylinder No. 4 (and the cylinder is then called C4), and this location is of cause a fixed location for a given engine. However, the mutual timing of the movements of the pistons can be varied at the design stage of the engine by changing the firing sequence. The firing sequence decides for every cylinder in the engine when a given cylinder is to fire during one engine revolution.

Computer programs have been developed in order to calculate possible firing sequences. These computer programs are based on try-and-error calculations where the different even firing sequences are calculated one after the other, and for each firing sequence vector summations are calculated for the force contributions from all cylinders. For in-line two-stroke engines of up to 12 cylinders these programs have been able to cope with the amount of calculations to be carried out. When, however, the number of cylinders is increased, it becomes increasingly difficult to carry out the calculations.

For an engine with 15 cylinders the number of possible even firing orders is about 87.000.000.000, and even for the most powerful of current computers the full computations cannot be performed within an acceptable time span. It is consequently required that a selection is made among the vast number of possibilities.

The object of the present invention is to improve vibration conditions of the 15 cylinder in-line engine.

In view of this, the two-stroke internal combustion engine having 15 cylinders is characterized in that that the firing sequence is one of the following firing sequences:
a) 1 3 12 14 7 4 5 10 15 8 2 6 9 13 11
b) 1 4 12 14 7 2 6 11 13 8 3 5 10 15 9
c) 1 4 12 15 6 2 7 10 13 8 3 5 11 14 9
d) 1 5 12 13 7 3 6 10 14 9 2 4 11 15 8
e) 1 5 12 13 7 3 6 9 14 10 2 4 11 15 8
f) 1 5 12 13 8 3 4 11 15 6 2 7 10 14 9
g) 15 1 2 13 8 3 4 1 11 5 7 2 6 10 14 9
h) 1 5 12 13 8 4 3 11 15 7 2 6 10 14 9
i) 1 5 12 14 6 3 7 9 13 10 2 4 11 15 8
j) 1 5 13 12 7 3 6 10 14 9 2 4 11 15 8
k) 1 5 13 12 8 4 3 11 15 7 2 6 10 14 9
l) 1 6 11 13 9 2 4 12 14 7 3 5 10 15 8,
wherein said cylinder C1 can be located at either the one or the other of the two ends of the engine, cylinder C15 is located at the end of the engine opposite to cylinder C1, the cylinders C2 to C14 are numbered consecutively along the length of the engine in direction from cylinder C1 towards cylinder C15, and the direction of rotation of the engine can be in either the one or the other rotational direction.

These firing sequences provide very fine vibrational conditions with very low levels of torsional vibration and of external unbalanced moments. As a result the crankshaft can be divided as is pleased for the actual installation. It is from a vibrational point of view possible to apply these firing sequences to an engine having the crankshaft of the engine built in only a single section, in two sections assembled in extension of one another or in more sections, such as three sections or four sections assembled in extension of one another.

The division of the crankshaft into sections has impact on the vibration behaviour of the engine because the distance between the cylinders in the engine is larger at the location of the division of the crankshaft. The larger distance is required in order to make room for assembly flanges and double main bearings between the neighbouring cylinders. The additional distance can e.g. amount to about 70% of the normal distance between cylinders. A consequence of dividing the crankshaft is the disadvantage of a larger resulting overall length of the engine. The firing sequences according to the present invention do not require that the crankshaft be divided at certain places or in a certain number of sections, and the engine designer thus has large freedom to make the crankshaft as suitable as possible for fulfilling other requirements, such as a desire for short length, or an adaptation of the crankshaft sections to the lifting capacity at hand.

The selected firing sequences are very few out of the possible amount of firing sequences. These firing sequences have been verified to have excellent vibration characteristics by calculating the vibration response from an engine operating in test with said firing sequences.

Although it is possible to use a vibration damper in connection with the engine according to the present invention, the firing sequences do not require use of such a damper.

The firing sequence can be either an even sequence or an uneven sequence. When the firing sequence is even the turning angle of the crankshaft between the firing of any two consecutive cylinders is 360°/15. This fixed size angle applies to all cylinders in the engine when the firing sequence is even. And the even sequences are utilized when the desire is to find acceptable firing sequences. When acceptable firing sequences have been found it is possible to investigate whether even better vibration characteristics can be obtained by utilizing uneven firing sequences. This can be considered as a fine-tuning of the vibration pattern. An uneven firing sequence is a sequence in which the turning angle of the crankshaft between the firing of at least two pairs of consecutively firing cylinders is different from 360°/15.

Examples of embodiments of the present invention are described in more detail in the following with reference to the highly schematic drawings, on which
Fig. 1 is a sectional view of a two-stroke engine with 15 cylinders according to the present invention,
Fig. 2 is a side view of the engine in Fig. 1, and
Fig. 3 is an illustration of a firing sequence for the cylinders pertaining to the engine of Fig. 1.

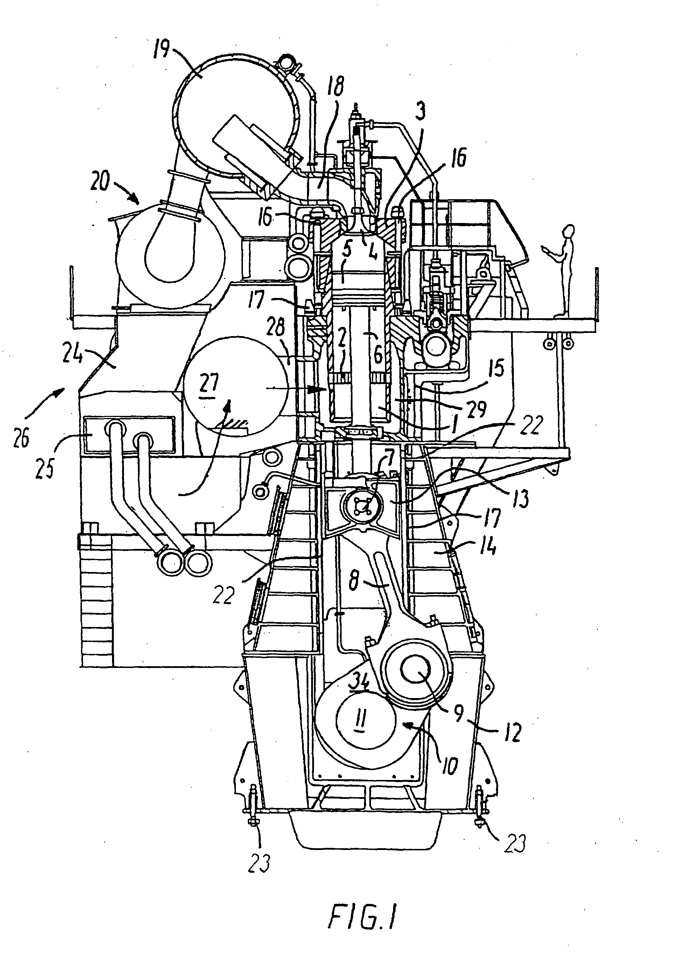

In Fig. 1 is seen the cross-section through a large two-stroke turbocharged internal combustion engine of the crosshead type, having 15 cylinders. The engine can e.g. be of the make MAN B&W Diesel and the type MC or ME, or of the make Wärtsilä of the type Sulzer RT-flex or Sulzer RTA or of the make Mitsubishi Heavy Industries. The cylinders can e.g. have a bore in the range of e.g. 60 to 120 cm, preferably from 80 to 120 cm, and more preferably from 95 to 120 cm. The engine can e.g. have a power in the range of 3000 to 8500 kW per cylinder, preferably from 4000 to 8000 kW, such as at least 5.000 kW per cylinder. Each cylinder C1-C15 typically has a cylinder liner 1 with a row of scavenge air ports 2 in its lower end and a cylinder cover 3 with an exhaust valve 4 located in the top of the cylinder.

A piston 5 is mounted on a piston rod 6, and the piston rod 6 is connected with a crank pin 9 on a crankshaft 10 via a crosshead 7 and a connecting rod 8. The crankshaft journal 11 is located in a main bearing mounted in a bedplate 12.

The crosshead is supported in the transverse direction by guide shoes 13 sliding on vertically extending guide planes 22 extending in the vertical direction from the top towards the bottom of the engine frame 14. The guide planes are fixed to the engine frame 14, and the engine frame is fixed to the top of the bedplate 12. Foundation bolts 23 fix bedplate 12 to an engine foundation (not shown). The engine foundation is part of the ship hull in case the engine is a main propulsion engine in a ship, or is part of a building structure in case the engine is a stationary engine in a power plant. External forces and moments caused by vibrations in the engine are transferred to the engine foundation and possibly also to other structures, such as walls or a hull side. A cylinder section 15 is mounted on top of the engine frame.

The cylinder cover 3 is fixed to the cylinder section by cover studs 16. Tie-rods 17 extend from the cylinder section down to the bedplate and they fix the cylinder section 15 to the bedplate 12. There are typically four tie-rods 17 acting on each cylinder section, and the sum of the downward forces from the tie-rods exceeds the upward directed force on the cylinder cover caused by the maximum pressure developed by the combustion in the combustion chamber in the cylinder.

An exhaust gas duct 18 extends from the individual cylinder in the area of the exhaust valve and opens out into an exhaust gas receiver 19 that is common to a number of cylinders. The engine may have only a single exhaust gas receiver which is common to all cylinders, or it can have a plurality of exhaust gas receivers, such as two or three, located end-to-end in extension of each other and typically interconnected through gas flow passages 19'.

The exhaust gas receiver is a pressure vessel with a circular cylindrical cross-section. The exhaust gas duct 18 is extending into the exhaust receiver 19 and delivers the exhaust gas from the pertaining combustion chamber when the exhaust valve is open. In the exhaust gas receiver pressure variations caused by the exhaust gas pulses emitted from the exhaust gas ducts are equalized to a more even pressure.

A plurality of turbochargers 20 are connected to the exhaust gas receiver 19 and deliver compressed air via an air flow passage 24 and possibly an inlet air cooler 25 to a scavenge air system 26 comprising at scavenge air receiver 27 and flow passages 28 to an inlet air chamber 29 at scavenge air ports 2.

The crankshaft can be made in a single section or it can be manufactured in several sections that are joined into a complete crankshaft at the assembly of the engine. If the crankshaft is of a single section the distance I between the cylinders in the engine may be constant through out the crankshaft. However, the crankshaft for an engine of the kind pertaining to the present invention can be divided into sections that are assembled into a unified crankshaft. The division of the crankshaft into several parts can e.g. be caused by a desire to adjust the weight of the individual crankshaft section to be less than the maximum lifting capacity of the crane utilized for handling the crankshaft section. The lifting capacity of such a crane can e.g. be 250 t. The crankshaft is typically divided into two or three sections, but it can alternatively be undivided or divided into more than three sections.

In connection with the above-mentioned disclosure of firing sequences a) to I) according to the present invention it is stated that the cylinders can be numbered from one or the other end of the engine, and that the engine can run in one or the other rotational direction.

For an engine running in one direction the firing sequence (a): 1-3-12-14-7-4-5-10-15-8-2-6-9-13-11 is the following when the engine has the opposite rotational direction (a-rev): 1-11-13-9-6-2-8-15-10-5-4-7-14-12-3. And if the cylinder C1 is located at the opposite end of the engine the firing sequence is (a-oppo): 1-8-14-10-7-3-5-15-13-4-2-9-12-11-6, and in the opposite rotational direction (a-oppo rev): 1-6-11-12-9-2-4-13-15-5-3-7-10-14-8. The below Table 1 show the corresponding values for the firing sequences a) to I).

**Table 1:**

| | | | | | | | | | | | | | | | |
|---|---|---|---|---|---|---|---|---|---|---|---|---|---|---|---|
| a | 1 | 3 | 12 | 14 | 7 | 4 | 5 | 10 | 15 | 8 | 2 | 6 | 9 | 13 | 11 |
| a-rev | 1 | 11 | 13 | 9 | 6 | 2 | 8 | 15 | 10 | 5 | 4 | 7 | 14 | 12 | 3 |
| a-oppo | 1 | 8 | 14 | 10 | 7 | 3 | 5 | 15 | 13 | 4 | 2 | 9 | 12 | 11 | 6 |
| a-oppo rev | 1 | 6 | 11 | 12 | 9 | 2 | 4 | 13 | 15 | 5 | 3 | 7 | 10 | 14 | 8 |
| b | 1 | 4 | 12 | 14 | 7 | 2 | 6 | 11 | 13 | 8 | 3 | 5 | 10 | 15 | 9 |
| b-rev | 1 | 9 | 15 | 10 | 5 | 3 | 8 | 13 | 11 | 6 | 2 | 7 | 14 | 12 | 4 |
| b-oppo | 1 | 7 | 15 | 12 | 4 | 2 | 9 | 14 | 10 | 5 | 3 | 8 | 13 | 11 | 6 |
| b-oppo rev | 1 | 6 | 11 | 13 | 8 | 3 | 5 | 10 | 14 | 9 | 2 | 4 | 12 | 15 | 7 |
| c | 1 | 4 | 12 | 15 | 6 | 2 | 7 | 10 | 13 | 8 | 3 | 5 | 11 | 14 | 9 |
| c-rev | 1 | 9 | 14 | 11 | 5 | 3 | 8 | 13 | 10 | 7 | 2 | 6 | 15 | 12 | 4 |
| c-oppo | 1 | 10 | 14 | 9 | 6 | 3 | 8 | 13 | 11 | 5 | 2 | 7 | 15 | 12 | 4 |
| c-oppo rev | 1 | 4 | 12 | 15 | 7 | 2 | 5 | 11 | 13 | 8 | 3 | 6 | 9 | 14 | 10 |
| d | 1 | 5 | 12 | 13 | 7 | 3 | 6 | 10 | 14 | 9 | 2 | 4 | 11 | 15 | 8 |
| d-rev | 1 | 8 | 15 | 11 | 4 | 2 | 9 | 14 | 10 | 6 | 3 | 7 | 13 | 12 | 5 |
| d-oppo | 1 | 8 | 15 | 11 | 4 | 3 | 9 | 13 | 10 | 6 | 2 | 7 | 14 | 12 | 5 |
| d-oppo rev | 1 | 5 | 12 | 14 | 7 | 2 | 6 | 10 | 13 | 9 | 3 | 4 | 11 | 15 | 8 |
| e | 1 | 5 | 12 | 13 | 7 | 3 | 6 | 9 | 14 | 10 | 2 | 4 | 11 | 15 | 8 |
| e-rev | 1 | 8 | 15 | 11 | 4 | 2 | 10 | 14 | 9 | 6 | 3 | 7 | 13 | 12 | 5 |
| e-oppo | 1 | 8 | 15 | 11 | 4 | 3 | 9 | 13 | 10 | 7 | 2 | 6 | 14 | 12 | 5 |
| e-oppo rev | 1 | 5 | 12 | 14 | 6 | 2 | 7 | 10 | 13 | 9 | 3 | 4 | 11 | 15 | 8 |
| f | 1 | 5 | 12 | 13 | 8 | 3 | 4 | 11 | 15 | 6 | 2 | 7 | 10 | 14 | 9 |
| f-rev | 1 | 9 | 14 | 10 | 7 | 2 | 6 | 15 | 11 | 4 | 3 | 8 | 13 | 12 | 5 |
| f-oppo | 1 | 10 | 14 | 9 | 6 | 2 | 7 | 15 | 11 | 4 | 3 | 8 | 13 | 12 | 5 |
| f-oppo rev | 1 | 5 | 12 | 13 | 8 | 3 | 4 | 11 | 15 | 7 | 2 | 6 | 9 | 14 | 10 |
| g | 1 | 5 | 12 | 13 | 8 | 3 | 4 | 11 | 15 | 7 | 2 | 6 | 10 | 14 | 9 |
| g-rev | 1 | 9 | 14 | 10 | 6 | 2 | 7 | 15 | 11 | 4 | 3 | 8 | 13 | 12 | 5 |
| g-oppo | 1 | 9 | 14 | 10 | 6 | 2 | 7 | 15 | 11 | 4 | 3 | 8 | 13 | 12 | 5 |
| g-oppo rev | 1 | 5 | 12 | 13 | 8 | 3 | 4 | 11 | 15 | 7 | 2 | 6 | 10 | 14 | 9 |
| h | 1 | 5 | 12 | 13 | 8 | 4 | 3 | 11 | 15 | 7 | 2 | 6 | 10 | 14 | 9 |
| h-rev 1 | 1 | 9 | 14 | 10 | 6 | 2 | 7 | 15 | 11 | 3 | 4 | 8 | 13 | 12 | 5 |
| h-oppo 1 | 1 | 9 | 14 | 10 | 6 | 2 | 7 | 15 | 11 | 4 | 3 | 8 | 12 | 13 | 5 |
| h-oppo rev 1 | 1 | 5 | 13 | 12 | 8 | 3 | 4 | 11 | 15 | 7 | 2 | 6 | 10 | 14 | 9 |
| i | 1 | 5 | 12 | 14 | 6 | 3 | 7 | 9 | 13 | 10 | 2 | 4 | 11 | 15 | 8 |
| i-rev | 1 | 8 | 15 | 11 | 4 | 2 | 10 | 13 | 9 | 7 | 3 | 6 | 14 | 12 | 5 |
| i-oppo | 1 | 8 | 15 | 11 | 4 | 2 | 10 | 13 | 9 | 7 | 3 | 6 | 14 | 12 | 5 |
| i-oppo rev | 1 | 5 | 12 | 14 | 6 | 3 | 7 | 9 | 13 | 10 | 2 | 4 | 11 | 15 | 8 |
| j | 1 | 5 | 13 | 12 | 7 | 3 | 6 | 10 | 14 | 9 | 2 | 4 | 11 | 15 | 8 |
| j-rev | 1 | 8 | 15 | 11 | 4 | 2 | 9 | 14 | 10 | 6 | 3 | 7 | 12 | 13 | 5 |
| j-oppo | 1 | 8 | 15 | 11 | 3 | 4 | 9 | 13 | 10 | 6 | 2 | 7 | 14 | 12 | 5 |
| j-oppo rev | 1 | 5 | 12 | 14 | 7 | 2 | 6 | 10 | 13 | 9 | 4 | 3 | 11 | 15 | 8 |
| k | 1 | 5 | 13 | 12 | 8 | 4 | 3 | 11 | 15 | 7 | 2 | 6 | 10 | 14 | 9 |
| k-rev | 1 | 9 | 14 | 10 | 6 | 2 | 7 | 15 | 11 | 3 | 4 | 8 | 12 | 13 | 5 |
| k-oppo | 1 | 9 | 14 | 10 | 6 | 2 | 7 | 15 | 11 | 3 | 4 | 8 | 12 | 13 | 5 |
| k-oppo rev | 1 | 5 | 13 | 12 | 8 | 4 | 3 | 11 | 15 | 7 | 2 | 6 | 10 | 14 | 9 |
| l | 1 | 6 | 11 | 13 | 9 | 2 | 4 | 12 | 14 | 7 | 3 | 5 | 10 | 15 | 8 |
| l-rev | 1 | 8 | 15 | 10 | 5 | 3 | 7 | 14 | 12 | 4 | 2 | 9 | 13 | 11 | 6 |
| l-oppo | 1 | 8 | 15 | 10 | 5 | 3 | 7 | 14 | 12 | 4 | 2 | 9 | 13 | 11 | 6 |
| l-oppo rev | 1 | 6 | 11 | 13 | 9 | 2 | 4 | 12 | 14 | 7 | 3 | 5 | 10 | 15 | 8 |

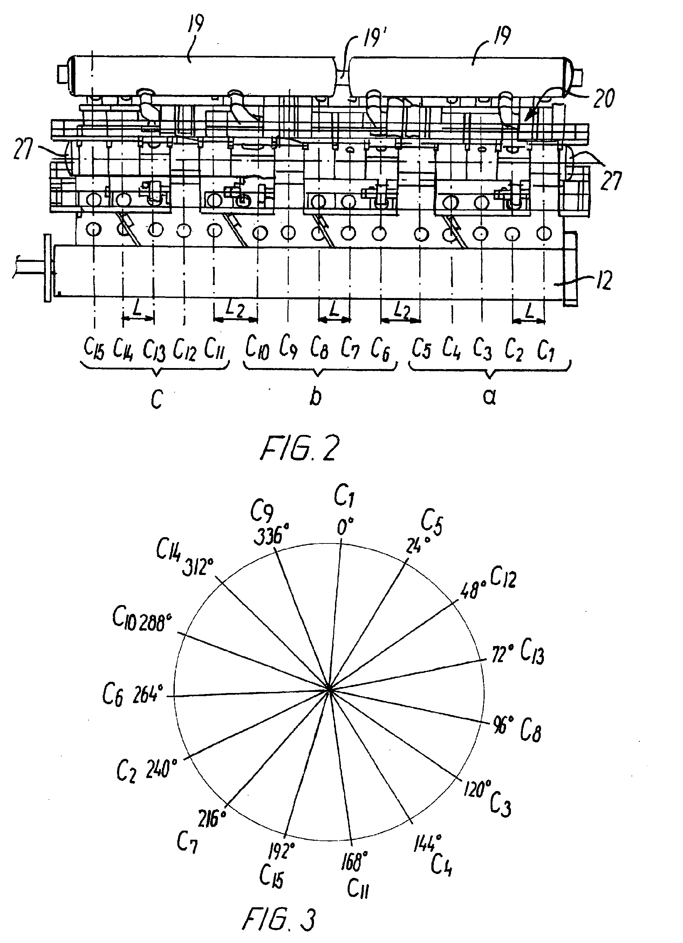

In the following illustrated example of an embodiment the engine has three crankshaft sections. In the side view illustration of Fig. 2 the crankshaft is divided between cylinders C5-C6 and C10-C11 so that the crankshaft has been divided in the cylinder ratio of 5-5-5. In an alternative division of the crankshaft into three sections the crankshaft is divided between cylinders C6-C7 and C11-C12 so that the crankshaft has been divided in the cylinder ratio of 6-5-4. The ordinary distance between cylinders is L. At the individual division the distance can be the larger distance L2 illustrated in Fig. 2. The distance L2 = L + l1. This is the normal distance between cylinders plus an additional length l1 caused by the presence of two main bearings and an intermediate crankshaft joint, such as a flange connection where two crankshaft sections are joined by bolting or by another suitable joining method.

For embodiments in which the crankshaft has the mentioned division in the cylinder ratio of 6-5-4 calculations of vibration levels have been performed for the firing sequences listed below as "Sequences A". The "C"'s have been omitted so that the listing corresponds to the traditional manner of listing firing sequences. 1-15 in order words correspond to C1-C15.

| Sequences A | Firing sequence |
|---|---|
| 1-5-12-14-6-3-7-9-13-10-2-4-11-15-8 | i |
| 1-4-12-14-7-2-6-11-13-8-3-5-10-15-9 | b |
| 1-4-12-15-6-2-7-10-13-8-3-5-11-14-9 | c |
| 1-6-11-13-9-2-4-12-14-7-3-5-10-15-8 | l |
| 1-5-13-12-7-3-6-10-14-9-2-4-11-15-8 | j |
| 1-5-12-13-7-3-6-10-14-9-2-4-11-15-8 | d |
| 1-5-12-13-7-3-6-9-14-10-2-4-11-15-8 | e |
| 1-5-12-13-8-3-4-11-15-7-2-6-10-14-9 | g |

The actual level of vibrations of course depends on the actual engine. Calculations have been made for an engine of the type K98ME, viz. a MAN B&W Diesel engine having a cylinder bore of 0.98 m and electronic control of exhaust valves and of fuel injection. The nominal distance between the cylinders is L = 1.750 m, and the distance between cylinders C6 and C7 and between cylinders C11 and C12 is L2 = 2.99 m. This engine has a nominal power of 93.450 kW at 100% engine load.

For a given firing sequence a so-called harmonic analysis is performed in order to obtain values for the various resulting vibration levels caused by the excitation sources in the engine. The harmonic analysis involves a summation of the individual harmonic contributions. The harmonic analysis can be performed electronically by a computer program such as PROFIR developed by MAN B&W Diesel or such as a textbook program as disclosed in "Die Verbrennungskraftmaschine" of H. Maass/H. Klier and K.E. Hafner/H. Maass, published by Springer-Verlag, Wien, New York. The result of the harmonic analysis is a series of values indicative of the resulting vibration level. The below List A shows the values calculated for the firing sequences mentioned in Sequences A. The columns refer to the following vibration values: E1 indicates 1^{st} order balancing; E2 indicates 2^{nd} order balancing; X4 indicates 4^{th} order X-vector summation; X5 indicates 5^{th} order X-vector summation; X6 indicates 6^{th} order X-vector summation and X7 indicates 7^{th} order X-vector summation. The values found at the harmonic analysis are representative for the vibration level.

For an actual engine it is possible to multiply the values found with a correlation factor and obtain an actual value of the excitation sources. This is commonplace to the skilled person, and to give an example relating to the particular engine K98ME the value E1 = 0.200 corresponds to a free moment of 409 kNm. The actual vibration levels are lower when the values in list A are smaller, and vice versa.

### List A:

| E1 | E2 | X4 | X5 | X6 | X7 | Firing sequence |
|---|---|---|---|---|---|---|
| 0.200 | 0.564 | 1.733 | 0.838 | 0.842 | 0.041 | i |
| 0.487 | 0.767 | 1.155 | 0.308 | 0.502 | 0.200 | b |
| 0.560 | 0.898 | 1.454 | 0.776 | 0.740 | 0.321 | c |
| 0.709 | 0.709 | 0.092 | 1.204 | 0.502 | 0.092 | l |
| 0.072 | 1.393 | 1.343 | 0.481 | 0.312 | 0.456 | j |
| 0.487 | 0.767 | 1.155 | 0.308 0.502 | | 0.200 | d |
| 0.619 | 1.019 | 1.391 | 0.442 0.623 | | 0.246 | e |
| 0.709 | 0.709 | 0.092 | 1.204 0.502 | | 0.092 | g |

The location in the engine of the division(s) of the crankshaft has influence on the vibration pattern of the engine. For the engine with the crankshaft divided in three sections the division can be an even division 5-5-5 where the first crankshaft section is for engine cylinders C1, C2, C3, 4 and C5, the second crankshaft section is for engine cylinders C6, C7, C8, C9 and C10, and the third crankshaft section is for engine cylinders C11, C12, C13, C14 and C15.

For embodiments in which the crankshaft has the mentioned division in the cylinder ratio of 5-5-5 calculations of vibration levels have been performed for the firing sequences listed below as "Sequences B".

| Sequences B | Firing sequence |
|---|---|
| 1-5-12-14-6-3-7-9-13-10-2-4-11-15-8 | i |
| 1-5-12-13-8-4-3-11-15-7-2-6-10-14-9 | h |
| 1-5-13-12-8-4-3-11-15-7-2-6-10-14-9 | k |
| 1-5-12-13-8-3-4-11-15-6-2-7-10-14-9 | f |
| 1-3-12-14-7-4-5-10-15-8-2-6-9-13-11 | a |

In the same manner as for the firing sequences A harmonic analyses are performed in order to obtain values for the various resulting vibration levels caused by the excitation sources in the engine. The below List B shows the values calculated for the firing sequences mentioned in Sequences B. The columns refer to the same types of vibration values as in the list A and reference is made thereto for the meaning of E1, E2 and X4 to X7.

### List B:

| E1 | E2 | X4 | X5 | X6 | X7 | Firing sequence |
|---|---|---|---|---|---|---|
| 0.074 | 0.952 | 1.629 | 0.833 | 0.745 | 0.101 | i |
| 0.248 | 1.133 | 0.115 | 1.507 | 0.332 | 0.359 | h |
| 0.378 | 1.079 | 0.175 | 1.732 | 0.099 | 0.342 | k |
| 0.601 | 1.418 | 0.377 | 1.507 | 0.629 | 0.206 | f |
| 0.692 | 0.728 | 0.864 | 1.846 | 0.641 | 0.147 | a |

When the crankshaft is undivided the calculations are performed with the nominal distance between cylinders (e.g. L = 1.750 m) applying between all cylinders. And when the crankshaft is divided in another manner the above-mentioned longer length is applied between the cylinders located adjacent a division.

The individual crank throw comprises two crank arms 34 and the crank pin 9 (Fig. 1), and the crankshaft journals 11 join the crank throws into a complete crankshaft. The cylinders C1 to C15 fire in the mentioned sequence. A firing sequence is implemented in the engine by the making the crankshaft 10 with crank throws pointing in the angular pattern required for obtaining the firing sequence. The angular pattern required for making the firing sequence as an even firing sequence, viz. a firing sequence with a regular (even) angular interval of 360°/15 = 24° between the firings is illustrated in Fig. 3. In this figure, a preferred firing sequence g) 1 5 12 13 8 3 4 11 15 7 2 6 10 14 9 is illustrated.

The respective angles between the crank throws 33 of the crankshaft appear in Fig. 3. It is also possible to use irregular firing sequences, viz. a firing sequence that is uneven in the sense that the angular interval between the firings of at least two pairs, and possibly several pairs, of consecutively firing cylinders deviates from 24°. A deviation of only a few degrees can result in a very different vibration pattern in the engine.

The engine can be an electronically controlled engine without a camshaft for activating fuel pumps and exhaust valves, e.g. an engine of the type ME. If the engine is of a traditional type with a camshaft, the camshaft can be driven from the crankshaft via a chain drive or a gearing, which suitably can be located between the cylinders separated by the larger distance 12.

The engine according to the present invention is suitable for use as a main propulsion engine in a container ship, and especially in a container ship having a capacity of at least 12.000 TEU, such as from 12.200 to 15.000 TEU, or even more than 15.000 TEU, one TEU being the equivalent of a single 20' container. TEU is the standard measure for the capacity of a container ship.

It is possible within the scope of the appended claims to make modifications to the embodiments described in the above. The engine frame can be of any suitable shape. The cylinders need not be numbered with C1 at the forward end of the engine and C15 at the aft end. They can equally well be numbered with C1 at the aft end and C15 at the forward end. And the engine can have a rotational direction either the one or the other direction. As an alternative to being a main engine in a ship, the engine can be utilized as a stationary engine in a power plant.

Embodiments within the scope of the patent claims may have only a single crankshaft division, two or more crankshaft divisions or no crankshaft division at all. It is an advantage to avoid crankshaft divisions because the overall length of the engine is then reduced.

## Claims

1. Two-stroke internal combustion engine having 15 cylinders in a single row and a crankshaft, which internal combustion engine has a firing sequence (n1 - n15) of the engine cylinders C1 to C15, **characterized in that** the firing sequence is one of the following firing sequences:
a) 1 3 12 14 7 4 5 10 15 8 2 6 9 13 11
b) 1 4 12 14 7 2 6 11 13 8 3 5 10 15 9
c) 1 4 12 15 6 2 7 10 13 8 3 5 11 14 9
d) 15 12 13 7 3 6 10 14 9 2 4 11 15 8
e) 1 5 12 13 7 3 6 9 14 10 2 4 11 15 8
f) 1 5 12 13 8 3 4 11 15 6 2 7 10 14 9
g) 1 5 12 13 8 3 4 11 15 7 2 6 10 14 9
h) 1 5 12 13 8 4 3 11 15 7 2 6 10 14 9
i) 1 5 12 14 6 3 7 9 13 10 2 4 11 15 8
j) 1 5 13 12 7 3 6 10 14 9 2 4 11 15 8
k) 1 5 13 12 8 4 3 11 15 7 2 6 10 14 9
l) 1 6 11 13 9 2 4 12 14 7 3 5 10 15 8,
wherein said cylinder C1 can be located at either the one or the other of the two ends of the engine, cylinder C15 is located at the end of the engine opposite to cylinder C1, the cylinders C2 to C14 are numbered consecutively along the length of the engine in direction from cylinder C1 towards cylinder C15, and the direction of rotation of the engine can be in either the one or the other rotational direction.

2. Two-stroke internal combustion engine according to claim 1, **characterized in that** the crankshaft of the engine is built in a single section, in two sections assembled in extension of one another, or in four or more sections assembled in extension of one another.

3. Two-stroke internal combustion engine according to claim 1 or claim 2, **characterized in that** the firing sequence is an uneven sequence in which the turning angle of the crankshaft between the firing of at least two pairs of consecutively firing cylinders is different from 24°.

4. Two-stroke internal combustion engine according to any of claims 1 to 3, **characterized in that** the engine is a main propulsion engine in a container ship, preferably in a container ship having a capacity of at least 12.000 TEU, even more preferably in a container ship having a capacity of at least 15.000 TEU.

## Patentansprüche

1. Zweitaktverbrennungsmotor mit fünfzehn Zylindern in einer einzigen Reihe und einer Kurbelwelle, wobei der Verbrennungsmotor eine Zündfolge (n1 - n15) der Motorzylinder C1 bis C15 aufweist, **dadurch gekennzeichnet, dass** die Zündfolge eine der folgenden Zündfolgen ist:
a) 1 3 12 14 7 4 5 10 15 8 2 6 9 13 11
b)1 4 12 14 7 2 6 11 13 8 3 5 10 15 9
c) 1 4 12 15 6 2 7 10 13 8 3 5 11 14 9
d) 1 5 12 13 7 3 6 10 14 9 2 4 11 15 8
e)1 5 12 13 7 3 6 9 14 10 2 4 11 15 8
f)1 5 12 13 8 3 4 11 15 6 2 7 10 14 9
g) 1 5 12 13 8 3 4 11 15 7 2 6 10 14 9
h)15 12 13 8 4 3 11 15 7 2 6 10 14 9
i) 1 5 12 14 6 3 7 9 13 10 2 4 11 15 8
j)1 5 13 12 7 3 6 10 14 9 2 4 11 15 8
k) 1 5 13 12 8 4 3 11 15 7 2 6 10 14 9
l) 1 6 11 13 9 2 4 12 14 7 3 5 10 15 8,
wobei der Zylinder C1 entweder an dem einen oder dem anderen von den zwei Enden des Motors angeordnet sein kann, der Zylinder C15 am Ende des Motors gegenüber dem Zylinder C1 angeordnet ist, die Zylinder C2 bis C14 fortlaufend entlang der Länge des Motors in Richtung vom Zylinder C1 zum Zylinder C15 nummeriert sind und die Drehrichtung des Motors entweder in der einen oder der anderen Drehrichtung sein kann.

2. Zweitaktverbrennungsmotor nach Anspruch 1, **dadurch gekennzeichnet, dass** die Kurbelwelle des Motors aus einem Abschnitt, aus zwei aneinander anschließenden Abschnitten oder aus vier oder mehr aneinander anschließenden Abschnitten gebildet ist.

3. Zweitaktverbrennungsmotor nach Anspruch 1, **dadurch gekennzeichnet, dass** die Zündfolge eine ungerade Folge ist, bei welcher der Drehwinkel der Kurbelwelle zwischen der Zündung von wenigstens zwei Paar aufeinanderfolgend zündenden Zylindern von 24° verschieden ist.

4. Zweitaktverbrennungsmotor nach einem der Ansprüche 1 bis 3, **dadurch gekennzeichnet, dass** der Motor ein Hauptantriebsmotor in einem Containerschiff, vorzugsweise in einem Containerschiff mit einer Kapazität von wenigstens 12000 TEU, besonders bevorzugt in einem Containerschiff mit einer Kapazität von wenigstens 15000 TEU, ist.

## Revendications

1. Moteur à combustion interne à deux temps ayant 15 cylindres en ligne et un vilebrequin dont le moteur à combustion interne a un ordre de mise à feu (n1 - n15) de cylindres de moteur C1 à C15, **caractérisé en ce que** l'ordre de mise à feu se compose d'un des ordres de mise à feu suivants:
a) 1 3 12 14 7 4 5 10 15 8 2 6 9 13 11
b) 1 4 12 14 7 2 6 11 13 8 3 5 10 15 9
c) 1 4 12 15 6 2 7 10 13 8 3 5 11 14 9
d) 1 5 12 13 7 3 6 10 14 9 2 4 11 15 8
e) 1 5 12 13 7 3 6 9 14 10 2 4 11 15 8
f) 1 5 12 13 8 3 4 11 15 6 2 7 10 14 9
g) 1 5 12 13 8 3 4 11 15 7 2 6 10 14 9
h) 1 5 12 13 8 4 3 11 15 7 2 6 10 14 9
i) 1 5 12 14 6 3 7 9 13 10 2 4 11 15 8
j) 1 5 13 12 7 3 6 10 14 9 2 4 11 15 8
k) 1 5 13 12 8 4 3 11 15 7 2 6 10 14 9
l) 1 6 11 13 9 24 12 14 7 3 5 10 15 8,
où le cylindre C1 peut être localisé à l'une ou l'autre des deux extrémités du moteur, le cylindre C15 est localisé à l'extrémité du moteur opposé le cylindre C1, les cylindres C2 à C14 forment une série numérotés sur la longueur du moteur dans la direction du cylindre C1 vers le cylindre C15, et la direction de la rotation de moteur peut être dans l'une ou l'autre direction rotatoire.

2. Moteur à combustion interne à deux temps selon la revendication 1, **caractérisé en ce que** le vilebrequin du moteur est incorporé dans un seule tronçon, dans deux tronçons assemblés dans la prolongation l'une à l'autre, ou dans quatre ou plus de tronçons assemblés dans la prolongation l'une à l'autre.

3. Moteur à combustion interne à deux temps selon la revendication 1 ou la revendication 2, **caractérisé en ce que** l'ordre de mise à feu se compose d'un ordre irrégulier dans lequel l'angle de braquage du vilebrequin entre la mise à feu d'au moins deux paires de cylindres de mise à feu consécutifs est différent de 24 degrés.

4. Moteur à combustion interne à deux temps selon une ou plus des revendications 1 à 3, **caractérisé en ce que** le moteur est un moteur principal de propulsion dans un navire porte-conteneurs, de préférence dans un navire porte-conteneurs ayant une capacité d'au moins 12.000 TEU, encore plus de préférence dans un navire porte-conteneurs ayant une capacité d'au moins 15.000 TEU.
